# EUROPEAN PATENT APPLICATION

(11) **EP 2 551 758 A1**
(43) Date of publication of application: **30.01.2013**
(21) Application number: 11759235.2
(22) Date of filing: 14.03.2011
(51) Int. Cl.: G06F 3/048, G06F 3/14, G09G 5/00

(54) **INFORMATION PROCESSING DEVICE, DISPLAY SWITCHING METHOD, PROGRAM, AND RECORDING MEDIUM**

(30) Priority: 24.03.2010 JP 2010068969
(71) Applicant: NEC Corporation, Tokyo 108-8001 (JP)
(72) Inventor: ASAGI, Yuji, Tokyo 141-0032 (JP)
(74) Representative: Vossius & Partner
(86) International application number: PCT/JP2011/055911
(87) International publication number: WO 2011/118429

(57) **Abstract**

Disclosed is an information processing device that, for an information processing device provided with a plurality of display devices, has improved ease of use. Also provided are a display switching method, a program, and a recording medium. In the disclosed information processing device, a first housing provided with a first display unit and a second housing provided with a second display unit are movably connected. The information processing device is provided with a determination means, which determines which housing is primary and which is secondary, and a display switching means, which switches the display units between primary and secondary in accordance with the aforementioned determination. The first and second display units also serve as input units which receive user input by sensing contact made with the display units. The display switching means displays a screen on the display unit determined to be primary.

## Description

### FIELD OF THE INVENTION

The present invention relates to an information processing device, a display switching method, a program and a recording medium and, in particular, relates to an information processing device, a display switching method, a program and a recording medium which improve operability of an information processing device having a plurality of display devices.

### BACKGROUND OF THE INVENTION

Regarding portability as important, an information processing device such as a laptop computer and so on (hereinafter, also referred to as a terminal device) becomes the spread structure and one which makes both side of the spread structure display devices is proposed (refer to patent document 1). In such a case, a structure which is installed an input device on one side of the spread structure (the input device using an operation button or a touch panel (such as software keyboard and so on)) and, a structure which is installed the input devices on both sides are proposed.

### Preceding technical literature

### Patent document

Patent document 1: Japanese Patent Application Laid-Open No. 2000-242393

### SUMMARY OF THE INVENTION

### [Problems to be solved by the invention]

However, the technology mentioned above includes the following problem.

In the terminal device which is provided with display devices in both housings of the spread structure, alteration of two screens is impossible between the side where the input device is not installed (Primary; primary screen) and the side where the input device is installed (Secondary; secondary screen). Restrict occurs to usage of the terminal device. And, in the terminal device which makes both sides of the spread structure display devices, in case input devices are installed on both sides, switching of two screens is changed based on user's explicit operation. Therefore, an operational burden arises.

The present invention has been made in view of such a situation, and has the object to improve an operability of the information processing device provided with a plurality of display devices.

### [Means for solving the problem]

An information processing device according to the present invention is an information processing device in which a first housing provided with a first display unit and a second housing provided with a second display unit are movably connected; and comprising a determination means for determining primary and secondary of each housing and a display switching means for switching the display units between primary and secondary in accordance with the aforementioned determination; wherein said first and second display units also serve as input units which receive user input by sensing contact made with the display units, and said display switching means displays a screen on the display unit determined to be primary.

A display switching method according to the present invention is a display switching method of an information processing device in which a first housing provided with a first display unit and a second housing provided with a second display unit are movably connected, comprising: a step which determines primary and secondary of each housing, and a step which performs switching of the display units between primary and secondary in accordance with the aforementioned determination: wherein said first and second display units also serve as input units which receive user input by sensing contact made with the display units, and said step which performs switching makes the display unit determined to be secondary to a state which can receive user input and displays a screen on the display unit determined to be primary.

A display switching program according to the present invention is a display switching program of an information processing device in which a first housing provided with a first display unit and a second housing provided with a second display unit are movably connected, which makes said information processing device execute: processing which determines primary and secondary of each housing; and processing which performs switching of the display units between primary and secondary in accordance with the aforementioned determination; wherein said first and second display units also serve as input units which receive user input by sensing contact made with the display units, and said processing which performs switching makes the display unit determined to be secondary to a state which can receive user input and displays a screen on the display unit determined to be primary.

A recording medium according to the present invention is a computer-readable recording medium in which processing of the display switching program according to the present invention mentioned above is recorded.

### [Effect of the invention]

According to the present invention, operability of an information processing device provided with a plurality of display devices can be improved.

### BRIEF DESCRIPTION OF THE DRAWINGS

Fig. 1 An outward appearance perspective view of a terminal device 1 according to an exemplary embodiment of the present invention.
Fig. 2 An outward appearance perspective view for describing the function of an operation/display unit of the terminal device 1 according to the exemplary embodiment of the present invention.
Fig. 3 A hardware block diagram of the terminal device 1 according to the exemplary embodiment of the present invention.
Fig. 4 A schematic diagram for describing the function of the terminal device 1 according to the exemplary embodiment of the present invention.
Fig. 5 A flow chart showing the operation processing of the terminal device 1 according to the exemplary embodiment of the present invention.
Fig. 6 A figure which shows with simplification that sensors 7a and 7b according to the exemplary embodiment of the present invention are installed in each housing.
Fig. 7 A figure for explaining that, even if the inclination of the terminal device 1 according to the exemplary embodiment of the present invention is changed, switching of Primary/Secondary is not performed.
Fig. 8 A figure for explaining that, even if the inclination of the terminal device 1 according to the exemplary embodiment of the present invention is changed, not performing switching of Primary/Secondary is effective.
Fig. 9 A figure for explaining that a speaker of the terminal device 1 according to the exemplary embodiment of the present invention is switched.

### EXEMAPLARY EMBODIMENT OF THE INVENTION

In the following, an exemplary embodiment of the present invention will be described in detail using drawings. Further, since the exemplary embodiment described below is a preferred exemplary embodiment of the present invention, technically desirable various limitations are imposed. However, as far as there is no description in the following description to the effect that the present invention is limited in particular, the scope of the present invention is not limited to these modes.

### (Structure)

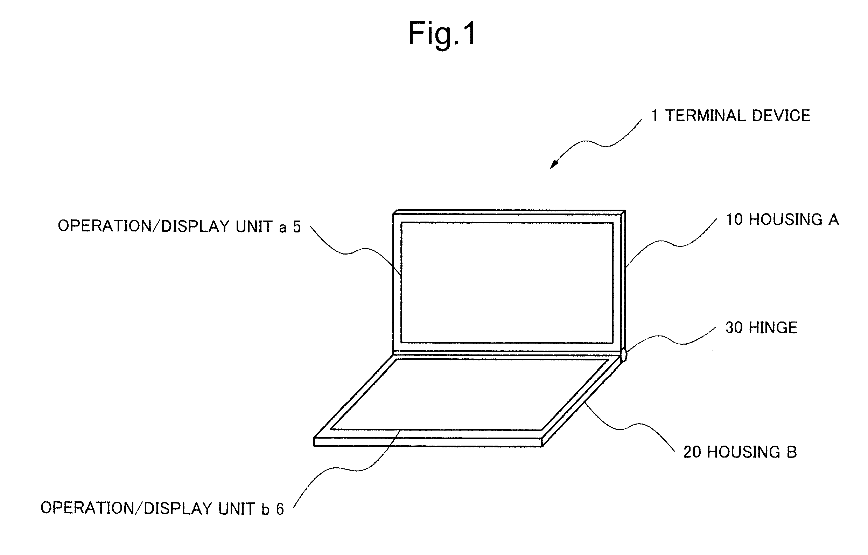

Fig. 1 is an outward appearance perspective view of a terminal device 1 according to this exemplary embodiment. The terminal device 1 is an information processing device of a spread (open and close type, folding) structure where two housings (A, B) are connected via a hinge unit 30. The two housings are movable with the hinge unit 3() as an axis. An operation/display unit installed in each housing has a function which displays an image and the like and a function which receives operation input based on the user at the same time. For example, a touch panel and so on is used.

The terminal device 1 according to this exemplary embodiment assumes a personal computer which is placed on such as a desk, opened a housing of an upper side and used. The operation/display unit installed in each housing has the function which displays the image and the like and the function which receives operation input based on the user at the same time.

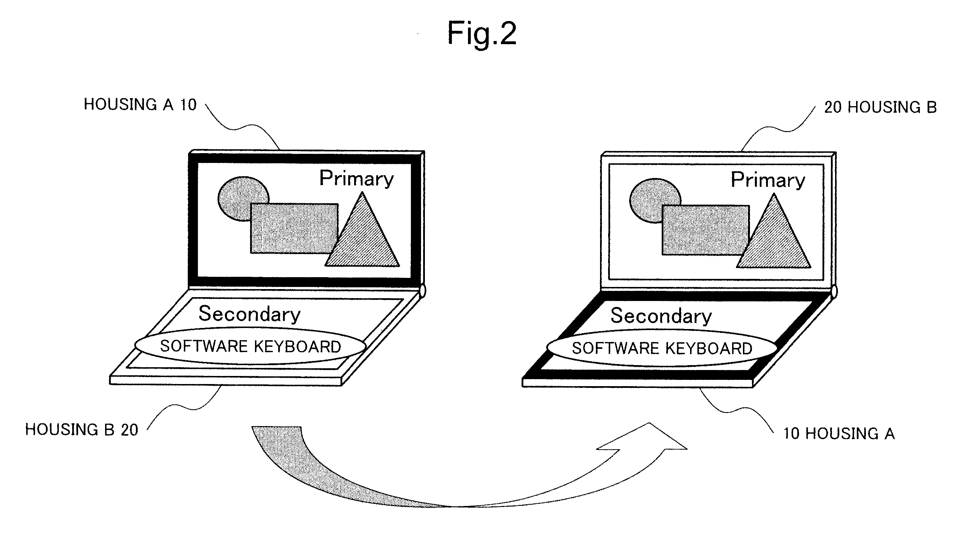

the operation/display unit of the housing which is opened to the upper side when placed on such as the desk is used as a primary screen (Primary), that is, as a display when it is a usual laptop computer. On the other hand, the operation/display unit of the housing which became a lower side when placed on such as the desk corresponds to a secondary screen (Secondary), that is, in case of the usual laptop computer, to the side where a keyboard or a touch pad and the like are installed and used (refer to Fig. 2).

Operation/display units a, b of the terminal device 1 according to this exemplary embodiment can be used as Primary and as Secondary respectively. In case it is cased as Secondary, each of the operation/display units a, b displays a software keyboard and the like. This exemplary embodiment is characterized by determining automatically Primary/Secondary of each housing of which the terminal device 1 is composed.

Also, the terminal device 1 can realize power-saving based on the Secondary/Primary determination. For example, the operation/display units a, b may, in case determined to be Primary, set the touch panel to an OFF state, that is, to a state which suspends a function which senses contact of a pen or a finger and outputs an information signal, or in case determined to be Secondary, lower a luminance of the operation/display unit and so on.

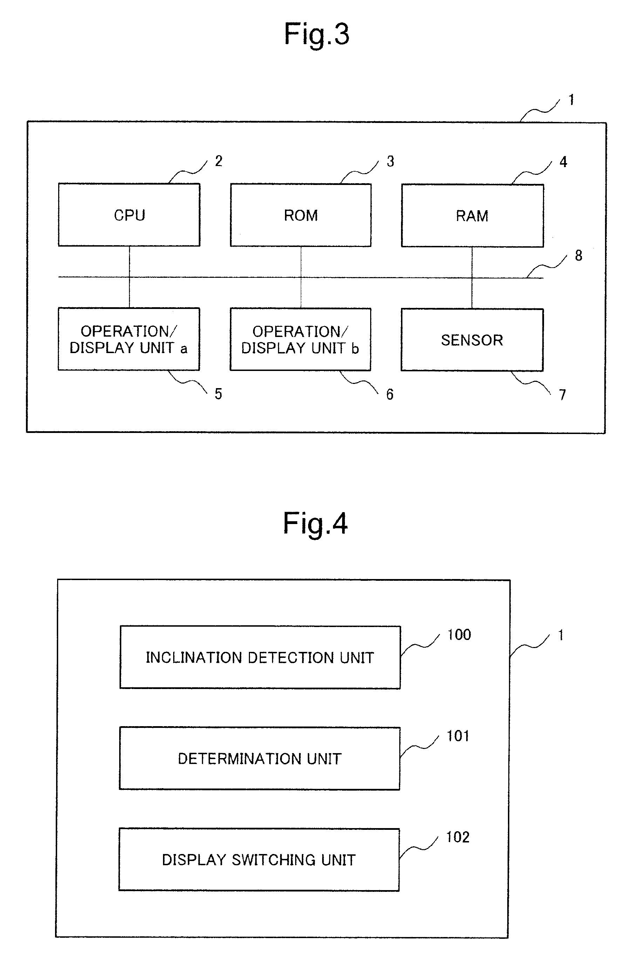

Next, a basic hardware configuration of the terminal device 1 according to this exemplary embodiment will be described using Fig. 3. Fig. 3 is a hardware block diagram of the terminal device 1 according to this exemplary embodiment. In the terminal device 1, a CPU (Central Processing Unit) 2, a ROM (Read Only Memory) 3, a RAM (Random Access Memory) 4, an operation/display unit a 5, an operation/display unit b 6 and a sensor 7 are connected to a bus 8.

The CPU 2 cooperates with a memory such as the ROM 3 and the RAM 4 and controls a whole of the terminal device 1. In the ROM 3, a control program of the terminal device I and various application programs and the like are stored in advance. The CPU 2 controls each function block based on the control program stored in the ROM 3. Also, the CPU 2 performs such as start/stop and control of the various application programs stored in the ROM 3.

The sensor 7 is a sensor which detects how much the housing inclines to a horizontal direction. The CPU 2 determines Primary/Secondary of` each operation/display unit using this. Detailed description will be made later.

Further, it is not limited in particular in which of the housing A or B, the CPU 2, the ROM 3 and the RAM 4 are stored.

Fig. 4 is a schematic diagram for describing functions of the terminal device 1 according to this exemplary embodiment. The terminal device 1 is constructed from an inclination detection unit 100 which detects inclination of the housing, a determination unit 101 which determines Primary/Secondary from the detected inclination and a display switching unit 102 which switches Primary/Secondary of the operation/display unit according to the determination.

As for the function described using Fig. 4, the inclination detection unit 100 is performed by the sensor 7 and other functions are mainly performed by the CPU 2.

### (Operation processing)

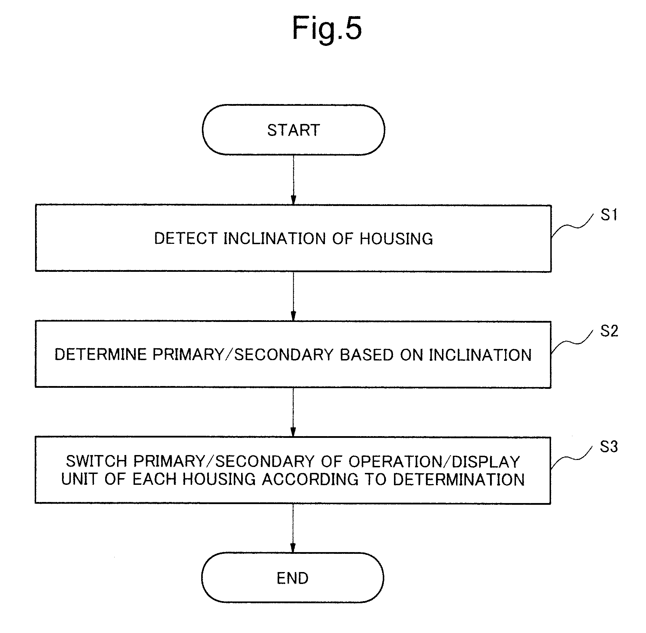

Primary/Secondary determination in each operation/display unit of the terminal device 1 according to this exemplary embodiment will be described. Fig. 5 is a flow chart showing operation processing of the terminal device 1 according to this exemplary embodiment.

First, the terminal device 1 detects the inclination of the housing using the sensor 7 (Step S1). The determination unit 101 determines Primary/Secondary based on the detected inclination (Step S2). The display switching unit 102 performs switching Primary/Secondary of the operation/display unit of each housing according to the determination of the determination unit 101 (Step S3).

For example, the display switching unit 102 makes the display switching unit 102 display a software keyboard and the like on the operation/display unit of the housing determined to be Secondary, and it in a state where operation input is possible. The operation/display unit of the housing which is determined to be Primary performs displaying a screen like a usual display.

Next, inclination detection and determination processing of Primary/Secondary will be described specifically using an example.

### [Example ]

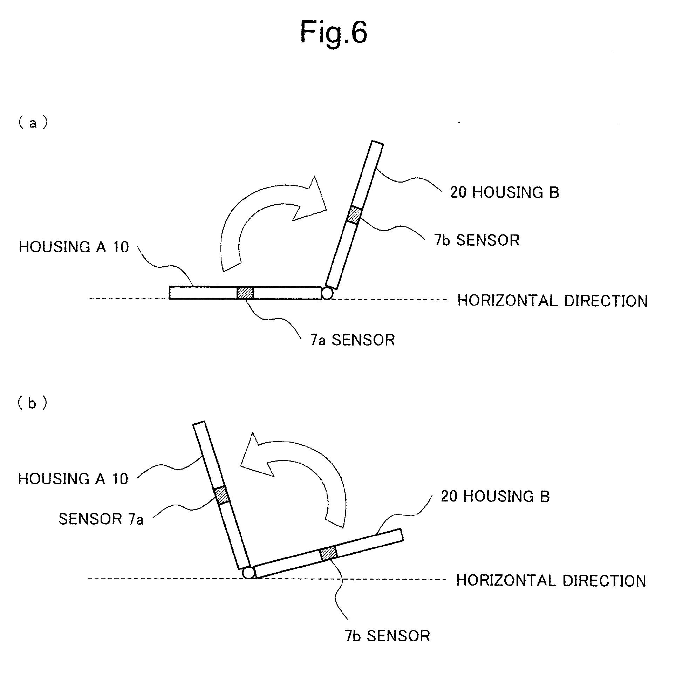

Here, as an example of the sensor 7, a magnetic field sensor which can detect how much it is inclined to a horizontal direction is used. The sensor 7 respectively detects the inclination of each housing which constructs the terminal device 1. For example, as shown in Fig. 6, the sensor 7 is respectively installed in each housing which constructs the terminal device 1 (sensor 7a, 7b). Fig. 6 is a figure which shows with simplification that the sensors 7a, 7b are installed in each housing.

The determination unit 101 compares inclination data acquired from each sensor and determines the one with the inclination nearer to a horizontal direction (the one with less inclination) as Secondary. Accordingly, in case of Fig. 6 (a), the housing A (10) is determined to be Secondary and the other housing B (20) to be Primary. In case of Fig. 6 (b), the housing B (20) is determined to be Secondary and the other housing A (10) to be Primary.

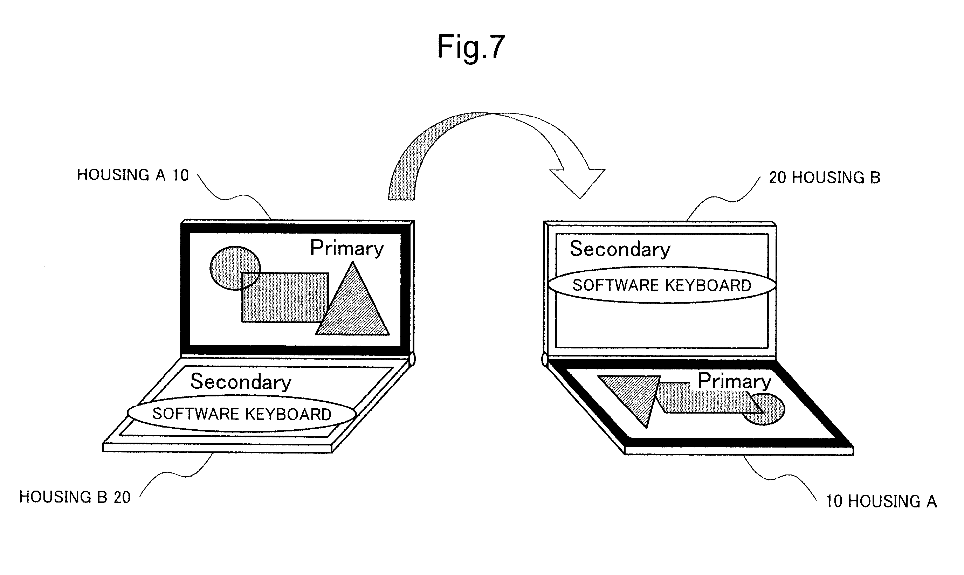

Further, as for the timing when the determination processing of Primary/Secondary is performed by detecting the inclination from the sensor 7, in addition to the time of power ON (the time when power is turned on), the time when an angle formed based on each housing is fixed at a certain value after being changed can be considered. That is, even when the inclination is changed, in case the angle formed based on each housing is not changed (though, it may be set so that changes within a predetermined angle may be permitted), the terminal device 1 does not switch Primary/Secondary and the state of the display unit is not changed (refer to Fig. 7).

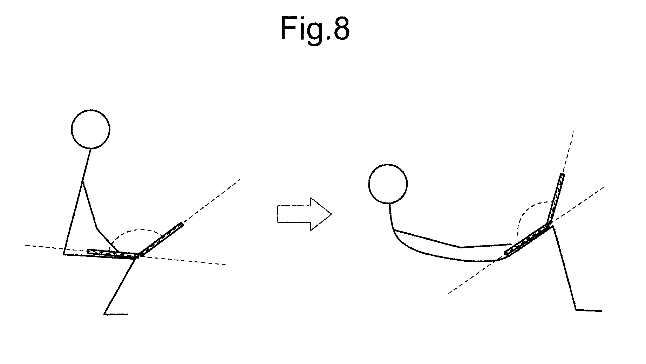

As for the angle, the terminal device 1 can calculate the angle of Primary against the housing determined to be Secondary using the sensor 7. In an example shown in Fig. 7, the inclination is changed extremely. For example, in case of using the terminal device I placing on lap, there is a case that the inclination changes as a posture collapses gradually and so on (refer to Fig. 8). However, it is inconvenient for the user that Primary/Secondary is often switched based on fluctuations of the inclination. Further, in such a case as showing a display screen to a partner who is facing by tilting the terminal device 1 toward the facing side is wanted, the user needs to change the angle once.

Also, the timing when the determination processing of Primary/Secondary is performed may be made a case when the angle formed based on each housing is the angle which is visible (for example, 90 degree - 120 degree).

### [Example 2]

In the example 1 mentioned above, although two magnetic field sensors are used, it can also be considered to perform the determination processing of Primary/Secondary by using one magnetic field sensor.

In this example, the magnetic field sensor is installed in one of each housing which constructs the terminal device 1, and a threshold of horizon determination is stored in the memory (the ROM 3 or the RAM 4) in advance. The determination processing of Primary/Secondary is determined based on whether the inclination detected by the magnetic field sensor exceeds the threshold of horizon determination. That is, in case the threshold of horizon determination is exceeded, the determination unit 101 determines the housing in which the magnetic field sensor is installed to be Primary and determines the other housing to be Secondary.

Further, by installing a sensor which detects an opening angle of the housing in the hinge 30, it becomes possible to realize also the processing using the angle formed based on each housing described in each example mentioned above.

### [Example 3]

A target to be switched based on the determination processing of Primary/Secondary is not limited to the operation/display unit.

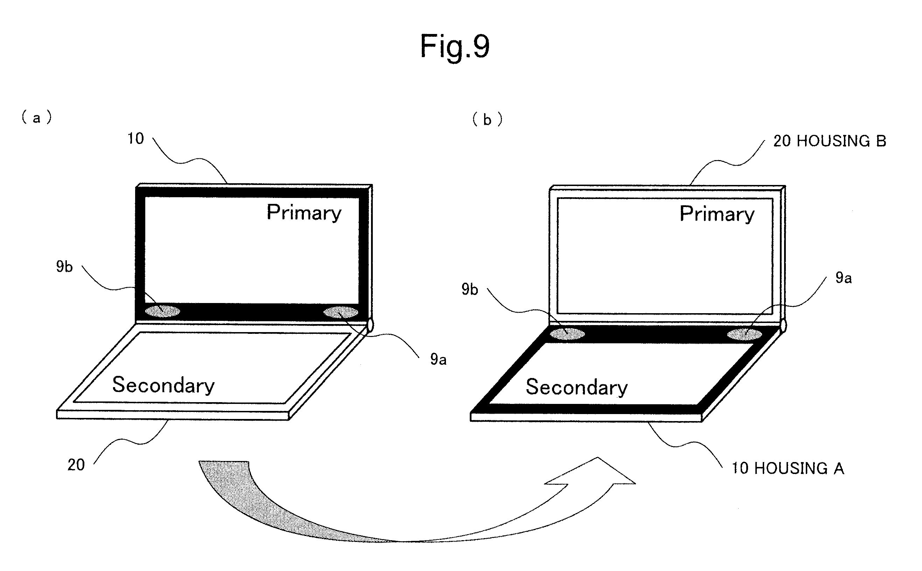

For example, in case speakers are installed in two housings respectively, it can be considered to output from the side of Primary in consideration of directivity of the speaker. Also, in case one set of speakers is installed in the other housing only, it can be considered to switch right and left (refer to Fig. 9). In Fig. 9 (a), 9a is a left speaker and 9b is a right speaker. In Fig. 9 (b), 9a is the right speaker and 9b is the left speaker.

Also, for example, in case a movable camera is installed, front side of Primary is a direction (imaging direction) where the user is. Therefore, it can be considered also to adjust automatically an angle so that the camera may be turned to the imaging direction.

Also, it can be considered to adjust a view angle of the operation/display unit.

Further, a program for which the CPU executes the processing shown in the flow chart of each figure composes the program according to the present invention. As a recording medium in which this program is recorded, a semiconductor memory unit or an optical and/or magnetic memory unit and the like can be used. The same effect substantially same as the present invention can be acquired by using such program and the recording medium in such as a system with a structure different from each exemplary embodiment mentioned above, and by executing the program mentioned above by the CPU in there.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2010-068969, filed on March 24, 2010, the disclosure of which is incorporated herein in its entirety by reference.

### [Description of symbol]

- 1: Terminal device
- 2: CPU
- 3: ROM
- 4: RAM
- 5: Operation/display unit a
- 6: Operation/display unit b
- 7, 7a, 7b: Sensor
- 8: Bus
- 9a, 9b: Speaker
- 10: Housing A
- 20: Housing B
- 30: Hinge

## Claims

1. An information processing device in which a first housing provided with a first display means and a second housing provided with a second display means are movably connected, comprising:
a determination means for determining primary or secondary of each housing; and
a display switching means for switching the display means between primary and secondary in accordance with said determination; wherein
said first and second display means also serve as input means which receive user input by sensing contact made with the display means, and
said display switching means displays a screen on the display means determined to be primary.

2. The information processing device according to claim 1; wherein a timing of switching based on said display switching means is at a time power is turned on.

3. The information processing device according to claim 1 or 2, further comprising:
a first detection means for detecting an inclination of said first housing; and
a second detection means for detecting an inclination of said second housing; wherein
said determination means compares the inclination of each housing acquired from each detection means, and makes the housing with smaller inclination to be secondary and the other housing to be primary.

4. The information processing device according to claim 3, further comprising:
a calculating for calculating an angle formed by each housing from the inclination of each housing which is acquired from said each detection means; and
the timing of switching by said display switching means is at least a case when said angle is a fixed value which is set in advance.

5. The information processing device according to claim 1 or 2, further comprising:
a third detection means for detecting an inclination of said first or second housing; and
a storage means for storing a threshold for horizon determination; wherein
said determination means determines primary/secondary based on the inclination of the housing acquired from said third detection means and said threshold for horizon determination.

6. The information processing device according to claim 5, further comprising:
an angle detecting means for detecting an angle formed by each housing; wherein
the timing of switching by said display switching means is at least a case when said angle is a fixed value which is set in advance.

7. The information processing device according to claim 4 or 6; wherein
in case the angle is fixed once again after the angle formed by said each housing was changed, the switching by said display switching means is performed.

8. The information processing device according to any one of claim 2 to 7; wherein
said first to third detection means are a magnetic field sensor.

9. The information processing device according to any one of claim 2 to 8, further comprising:
a voice output means for being installed in said each housing; and
a control means for controlling so that voice output is performed from the voice output means provided in the housing which is determined to be primary by said determination means.

10. The information processing device according to any one of claim 2 to 8, further comprising:
a set of voice output means for being installed in either of said each housing; and
a control means for controlling so that right and left of voice output from said set of voice output means is switched according to the determination of primary/secondary by said determination means.

11. A display switching method of an information processing device in which a first housing provided with a first display means and a second housing provided with a second display means are movably connected, comprising:
a step which determines primary or secondary of each housing; and
a step which performs switching of said display means between primary and secondary in accordance with said determination; wherein
said first and second display means also serve as input means which receive user input by sensing contact made with the display means, and
said step which performs switching makes the display means determined to be secondary be a state which can receive user input, and displays a screen on the display means determined to be primary.

12. A display switching program of an information processing device in which a first housing provided with a first display means and a second housing provided with a second display means are movably connected, which makes said information processing device execute:
processing which determines primary or secondary of each housing; and
processing which performs switching of said display means between primary and secondary in accordance with said determination; wherein
said first and second display means also serve as input means which receive user input by sensing contact made with the display means, and
said processing which performs switching makes the display means determined to be secondary be a state which can receive user input, and displays a screen on the display means determined to be primary.

13. A computer-readable recording medium which records processing of the display switching program according to claim 12.
